(19) Europäisches Patentamt
European Patent Office
Office européen des brevets

(11) Numéro de publication: **0 188 923**
**B1**

(12) **FASCICULE DE BREVET EUROPÉEN**

(45) Date de publication du fascicule du brevet: **15.11.89**

(51) Int. Cl.⁴: **H 01 M 6/14**

(21) Numéro de dépôt: **85401811.6**

(22) Date de dépôt: **18.09.85**

(54) **Générateur électrochimique dont la matière active négative est à base d'un métalalcalin ou alcalinoterreux.**

(30) Priorité: **03.12.84 FR 8418399**

(43) Date de publication de la demande: **30.07.86 Bulletin 86/31**

(45) Mention de la délivrance du brevet: **15.11.89 Bulletin 89/46**

(84) Etats contractants désignés: **AT BE CH DE FR GB IT LI LU NL SE**

(56) Documents cité:
**EP-A-0 039 840**
**FR-A-2 323 238**
**FR-A-2 445 032**
**FR-A-2 445 033**
**US-A-4 071 664**
**US-A-4 238 552**
**US-A-4 362 794**
**US-A-4 401 732**
**US-A-4 403 021**

(73) Titulaire: **Société Anonyme dite SAFT, 156, avenue de Metz, F-93230 Romainville (FR)**

(72) Inventeur: **Vallin, Didier, 18 La Vallée des Pierres Brunes Smarves, F-86240 Liguge (FR)**
Inventeur: **Grassien, Jean- Yves, La Charauderie Gizay, F-86340 La Villedieu Du Clain (FR)**
Inventeur: **Chenebault, Philippe, 35 Rue Ladmirault, F-86000 Poitiers (FR)**
Inventeur: **Kerouanton, Alain, 2 rue de la Prévôté, F-86000 Poitiers (FR)**

(74) Mandataire: **Weinmiller, Jürgen, Lennéstrasse 9 Postfach 24, D-8133 Feldafing (DE)**

**EP 0 188 923 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention concerne un générateur électrochimique dont la matière active négative est à base d'un métal alcalin ou alcalino-terreux, et la matière active positive est un oxyhalogénure liquide, tel que le chlorure de thionyle, qui constitue également le solvant d'électrolyte, ce dernier pouvant comporter d'autres co-solvants.

Lorsqu'une pile de ce genre n'est pas en cours de décharge, la substance liquide faisant fonction de matière positive et de solvant d'électrolyte réagit avec le métal de l'électrode négative, de sorte qu'il se forme sur cette électrode un film superficiel protecteur. La présence d'un tel film constitue un inconvénient car il peut en résulter au début de la décharge un "retard de montée en tension" autrement dit, la tension normale de fonctionnement n'est atteinte qu'au bout d'un certain temps. Ce phénomène est d'autant plus important que la durée et la température de stockage sont plus élevées.

Diverses solutions ont déjà été proposées pour réduire le plus possible ce "retard de montée en tension".

Ainsi le brevet américain n° 4 309 490 publié le 5 janvier 1982 décrit une pile au lithium-chlorure de thionyle, dont le soluté de l'électrolyte est un sel complexe résultant de l'action du chlorure de lithium LiCl sur le chlorure d'aluminium $AlCl_3$, ce dernier étant totalement neutralisé par LiCl pour former $LiAlCl_4$. Le brevet prévoit d'ajouter à l'électrolyte une certaine quantité d'anhydride sulfureux $SO_2$, le rapport molaire $AlCl_3/SO_2$ étant compris entre 0,9 et 1,5. Cette méthode implique donc l'introduction de concentrations importantes d'anhydride sulfureux, ce qui peut conduire à des phénomènes de pressurisation des piles et à des difficultés pratiques de mise en oeuvre.

Il a été proposé par ailleurs dans le brevet américain n° 4 228 229 publié le 14 octobre 1980 et dans le brevet français n° 2 485 271 publié le 24 décembre 1981, d'autres techniques mettant en oeuvre la neutralisation partielle ou totale de solutions de chlorure d'aluminium par des bases de Lewis autres que LiCl, par exemple $Li_2O$ ou $Li_2CO_3$. Ces techniques ont permis d'obtenir une amélioration notable par rapport à l'électrolyte initial préparé par neutralisation d'une solution de $AlCl_3$ par LiCl. Elles conduisent à l'obtention de solutions contenant également de l'anhydride sulfureux $SO_2$. Dans ce cas, il est généré "in situ" au cours de la neutralisation de $AlCl_3$ par les bases de Lewis correspondantes, mais dans des proportions telles que le rapport molaire $AlCl_3/SO_2$ est au moins égal ou supérieur à 2, selon le degré de neutralisation choisi.

A titre d'exemple, on a utilisé, pour des raisons liées à l'autodécharge des piles, des électrolytes entièrement neutralisés (rapport molaire $AlCl_3/SO_2 = 2$), avec une concentration en $LiAlCl_4$ correspondant à 1,35 mole/litre.

La réaction mise en oeuvre est par exemple la suivante:

$$2AlCl_3 + Li_2O + SOCl_2 \rightarrow 2\,LiAlCl_4 + SO_2$$

Bien que la solution explicitée ci-dessus ait apporté des améliorations notables pour la réduction des temps de montée en tension, elle s'est révélée encore insuffisante pour un certain nombre d'applications.

La présente invention a pour but de réduire encore le temps de montée en tension.

Ce but est atteint selon l'invention par le générateur tel qu'il est défini par la revendication 3. En ce qui concerne des exemples préférés de mise en oeuvre de ce générateur ainsi que son procédé de fabrication, référence est faite aux revendications 2 à 11.

Il est à noter que les documents FR-A-2 445 032 et FR-A-2 445 033 décrivent des piles dont la cathode est une cathode liquide d' anhydride sulfurique $SO_3$.

L'invention sera décrite ci-après plus en détail à l'aide de quelques exemples de réalisation donnés à titre illustratif, mais nullement limitatif. Dans le dessin annexé, la figure unique est une vue schématique en coupe d'une pile selon l'invention.

On a réalisé plusieurs séries de piles du type de celle qui apparaît dans la figure. Ces piles, de forme cylindrique, ont les dimensions suivantes : Hauteur : 50 mm, diamètre extérieur : 13,4 mm.

La pile 1 illustrée comporte un godet 2 en une feuille complexe constituée par une feuille d'acier inoxydable et une feuille de nickel laminées ensemble, la feuille de nickel étant tournée vers l'intérieur. La fermeture du godet se compose d'un anneau 3 en acier inoxydable soudé en 4 au bord du godet et qui est électriquement isolé d'un cylindre 5 en alliage de ferro-nickel par un joint étanche en verre 6. Ce cylindre 5 est fermé par un bouchon 7 en alliage de ferro-nickel qui lui est soudé en 8. On disque de polytétrafluoréthylène 9 protège l'anneau 3 de l'attaque chimique des composants de la pile.

La pile est ainsi fermée hermétiquement. Elle est terminée extérieurement par un capot 10 en acier inoxydable qui coiffe le cylindre 5 et est en contact avec un anneau 11 qui s'enfile à force sur le cylindre 5. L'anneau 11 est isolé de l'anneau 3 par un anneau 12 en polytétrafluoréthylène.

Le godet est enveloppé dans une gaine 13 en chlorure de polyvinyle et une couche de résine thermodurcissable 14 protège les bords du capot 10.

Le collecteur cathodique 15 est un cylindre poreux constitué par un mélange de 85 % de noir d'acétylène et de 15 % de polytétrafluoréthylène au contact du godet 2. L'anode 16 est constituée par une feuille de lithium enroulée sur le collecteur anodique 17, lui-même constitué par une feuille d'acier inoxydable enroulée. Un ressort 18 en acier inoxydable tend à repousser l'anode vers le collecteur cathodique 15 dont elle est séparée par un séparateur 19. On disque 20 de polytétrafluoréthylène isole l'anode du fond du godet 2. Le ressort 18 est soudé au cylindre 5, de sorte que le

capot 10 constitue la borne négative de la pile dont le godet 2 constitue la borne positive par son fond non protégé par la gaine 13. L'aire anodique faisant face au collecteur cathodique est de 10 $cm^2$.

On a introduit dans l'élément divers types de solutions qui servent à la fois d'électrolyte et de matière active positive.

- Electrolyte A - Il s'agit d'un électrolyte de l'art antérieur. On neutralise une solution de chlorure d'aluminium $AlCl_3$ dans le chlorure de thionyle par la base de Lewis LiCl; on obtient $LiAlCl_4$ (concentration 1,35 moles/litre).

- Electrolyte B - Il s'agit également d'un électrolyte de l'art antérieur. On l'obtient par neutralisation d'une solution de $AlCl_3$ dans le chlorure de thionyle par la base de Lewis $Li_2 CO_3$. La réaction est la suivante:

$$Li_2CO_3 + 2AlCl_3 + SOCl_2 \rightarrow 2\ LiAlCl_4 + SO_2 + CO_2$$

La concentration en $LiAlCl_4$ est de 1,35 moles par litre.

- Electrolyte C (selon l'invention) - On ajoute à l'électrolyte A 0,5 % (en poids d'électrolyte) de tétrachlorosulfatoaluminate de lithium $LiAl(SO_3Cl)_4$

- Electrolytes $D_1$, $D_2$, $D_3$ (selon l'invention).

Ils sont constitués d'électrolyte B et de LiA l$(SO_3Cl)_4$ dans les proportions respectives de 0,1 %, 0,5 %, 1 %.

- Electrolytes $E_1$ et $E_2$ (selon l'invention).

On ajoute à l'électrolyte B une certaine quantité d'anhydride sulfurique $SO_3$ respectivement 0,1 % et 0,25 % en poids d'électrolyte. En présence du composé $LiAlCl_4$, l'anhydride sulfurique conduit à la synthèse de $LiAl(SO_3Cl)_4$ selon la réaction:

$$LiAlCl_4 + 4SO_3 \xrightarrow{SOCl_2} LiAl(SO_3Cl)_4$$

- Electrolyte F (selon l'invention) - On ajoute à l'électrolyte B 0,5 % d'acide chlorosulfonique du commerce $HSO_3Cl$. Il se produit la réaction suivante:

$$LiAlCl_4 + 4HSO_3Cl \rightarrow LiAl(SO_3Cl)_4 + 4HCl$$

L'acide chlorhydrique formé peut aisément être éliminé par chauffage sous reflux pendant quelques heures.

- Electrolyte G (selon l'invention). On ajoute à l'électrolyte B, 0,5 % d'acide chlorosulfonique et 0,5 % d'anhydride sulfurique.

On a donc réalisé dix séries de piles A, B, C, $D_1$, $D_2$, $D_3$, $E_1$, $E_2$, F, G qui ont été stockées sept jours à température ambiante, puis maintenues sept jours à 70° C. Vingt quatre heures après leur sortie de l'étuve, les tests suivants ont été réalisés

- mesure de l'impédance 2 (en ohms) sous 40 Hertz

- mise en décharge à la température ambiante sur une résistance de 57 ohms (densité de courant sensiblement égale à 5 $mA/cm^2$) la tension U aux bornes de la pile a été mesurée 0,3 seconde, 5 secondes èt 60 secondes après la mise en décharge.

Les résultats moyens obtenus ont été reportés dans le tableau ci-dessous.

| Piles | Fe m (volt) | Z (ohm) | U 0,3 s volts | U 0,3 s volts | U 60 s volts |
|---|---|---|---|---|---|
| A | 3,706 | 825 | 1,48 | 2,12 | 2,80 |
| B | 3,705 | 345 | 2,29 | 2,77 | 2,92 |
| C | 3,706 | 329 | 2,37 | 2,68 | 2,92 |
| $D_1$ | 3,725 | 270 | 2,68 | 2,86 | 2,77 |
| $D_2$ | 3,709 | 104 | 2,85 | 3,31 | 3,32 |
| $D_3$ | 3,698 | 69,5 | 3,02 | 3,21 | 3,31 |
| $E_1$ | 3,708 | 305 | 2,39 | 2,44 | 2,50 |
| $E_2$ | 3,713 | 365 | 2,52 | 2,63 | 2,93 |
| F | 3,712 | 99 | 3,17 | 3,36 | 3,33 |
| G | 3,743 | 96 | 3,16 | 3,27 | 3,25 |

L'amélioration apportée par l'invention apparaît clairement dans ce tableau.

Bien entendu les quantités de composé minéral ont été données à titre indicatif, la quantité de ce composé pouvant varier de 0,01 % jusqu'à la saturation dans l'électrolyte.

Selon une variante le lithium peut être remplacé par le sodium le soluté est alors avantageusement $NaAlCl_4$ et le composé minéral peut être $NaAl(SO_3Cl)_4$. Mais il peut être également remplacé par le calcium ou le potassium.

Selon d'autres modes de réalisation mettant en oeuvre une anode de lithium, les solutés envisagés peuvent avoir les formules suivantes:

$LiBCl_4$, $LiGaCl_4$, $LiInCl_4$, $LiVCl_4$, $LiSiCl_5$, $LiSbCl_6$, $LiNbCl_6$, $LiTaCl_6$, $LiWCl_7$.

Dans les formules de solutés et de composés minéraux additionnels, le chlore peut être remplacé par le fluor, le brome ou l'iode.

## Revendications

1. Générateur électrochimique dont la matière active négative est à base d'un métal alcalin ou alcalinoterreux et dont 1' électrolyte comprend un soluté et au moins un solvant choisi parmi le chlorure de thionyle $SOCl_2$, le chlorure de phosphoryle $POCl_3$, le trichlorure de vanadyle $VOCl_3$, le tribromure de vanadyle $VOBr_3$, le bromure de thionyle $SOBr_2$, le chlorure de sulfuryle $SO_2Cl_2$, le chlorure de chromyle $CrO_2Cl_2$, l'oxychlorure de sélénium $SeOCl_2$ et leurs mélanges, ledit solvant constituant également la matière active positive, caractérisé par le fait que ledit électrolyte contient en outre au moins un composé minéral de

type polyhalogénosulfatométallate alcalin ou alcalinoterreux de formule

$M\,M'_m\,(SO_3X)_n$ où:

M est ledit métal alcalin ou alcalinoterreux,

M' est choisi parmi Al, B, Ga, In, V, Sb, Nb, Si, W, Ta, X est choisi parmi le chlore, le fluor, le brome et l'iode,

m = 1, si M est un métal alcalin,

m = 2, si M est un métal alcalinoterreux,

la valeur de s'en déduisant par équilibrage des valences.

2. Générateur selon la revendication 1, caractérisé par le fait que la concentration dudit composé minéral est supérieure à 0,01 % en poids d'électrolyte.

3. Générateur selon l'une des revendications 1 et 2, caractérisé par le fait que ledit électrolyte contient en outre de l'anhydride sulfureux.

4. Générateur électrochimique selon l'une des revendications 1 et 2, caractérisé par le fait que ledit solvant est le chlorure de thionyle, que ledit métal alcalin est le lithium et que ledit soluté répond à la formule $LiM'Cl_x$.

5. Générateur électrochimique selon la revendication 4, caractérisé par le fait que le soluté dudit électrolyte est constitué de tétrachloroaluminate de lithium $LiAlCl_4$.

6. Générateur électrochimique selon la revendication 5, caractérisé par le fait que ledit composé minéral est un chlorosulfatoaluminate de lithium de formule $LiAl(SO_3Cl)_4$.

7. Générateur électrochimique selon l'une des revendications 4 à 6, caractérisé par le fait que ledit électrolyte contient en outre de l'anhydride sulfureux, le rapport molaire $M'/SO_2$ étant supérieur à 1,5.

8. Générateur électrochimique selon l'une des revendications 1 et 2, caractérisé par le fait que ledit solvant est le chlorure de thionyle, que ledit métal alcalin est le sodium, et que ledit soluté est constitué de tétrachloroaluminate de sodium $NaAlCl_4$.

9. Générateur électrochimique selon la revendication 8, caractérisé par le fait que ledit composé minéral est un chlorosulfatoaluminate de sodium de formule $NaAl\,(SO_3\,Cl)_4$.

10. Procédé de fabrication d'un générateur selon l'une des revendications précédentes, caractérisé par le fait que ledit composé minéral est ajouté directement dans l'électrolyte.

11. Procédé de fabrication d'un générateur selon l'une des revendications précédentes, caractérisé par le fait que ledit composé minéral est obtenu in situ par réaction dudit électrolyte avec un composé choisi parmi $HSO_3X$, $SO_3$, $H_2SO_4$, et leurs mélanges, X étant choisi parmi le chlore, le fluor, le brome et l'iode.

## Patentansprüche

1. Elektrochemischer Generator, dessen negative aktive Masse ein Alkali- oder Erdalkalimetall zur Grundlage hat und dessen Elektrolyt einen gelösten Stoff und mindestens ein Lösungsmittel aufweist, wobei letzteres unter den Stoffen Thionylchlorid $SOCl_2$, Phosphorylchlorid $POCl_3$, Vanadyltrichlorid $VOCl_3$, Vanadyltribromid $VOBr_3$, Tionylbromid $SOBr_2$, Sulfurylchlorid $SO_2Cl_2$, Chromylchlorid $CrO_2Cl_2$, Selenoxychlorid $SeOCl_2$ und deren Mischungen ausgewählt wird und das Lösungsmittel ebenfalls die positive aktive Masse bildet, dadurch gekennzeichnet, daß der Elektrolyt weiter mindestens eine mineralische Verbindung vom Typ des alkalischen oder erdalkalischen Polyhalogenosulfatmetallat gemäß der Formel:

$MM'_m(SO_3X)_n$

enthält, wobei

M das Alkali- oder Erdalkalimetall ist,

M' unter den Elementen Al, B, Ga, In, V, Sb, Nb, Si, W, Ta ausgewählt wird,

X unter den Elementen Chlor, Fluor, Brom und Jod ausgewählt wird,

mit m = 1, wenn M ein Alkalimetall,

m = 2, wenn M ein Erdalkalimetall ist,

während der Wert von n durch den Valenzausgleich gewonnen wird.

2. Generator nach Anspruch 1, dadurch gekennzeichnet, daß die Konzentration der mineralischen Verbindung großer als 0,01 Gewichtsprozent des Elektrolyten ist.

3. Generator nach einem der Ansprüche 1 und 2, dadurch gekennzeichnet, daß der Elektrolyt weiter Schwefelanhydrid $SO_2$ enthalt.

4. Elektrochemischer Generator nach einem der Ansprüche 1 und 2, dadurch gekennzeichnet, daß das Lösungsmittel aus Thionylchlorid, das Alkalimetall aus Lithium besteht und der gelöste Stoff der Formel $LiM'Cl_x$ entspricht.

5. Elektrochemischer Generator nach Anspruch 4, dadurch gekennzeichnet, daß der gelöste Stoff des Elektrolyten aus Lithiumtetrachloraluminat $LiAlCl_4$ besteht.

6. Elektrochemischer Generator nach Anspruch 5, dadurch gekennzeichnet, daß die mineralische Verbindung Lithiumchlorsulfataluminat gemäß der Formel $LiAl(SO_3Cl)_4$ ist.

7. Elektrochemischer Generator nach einem der Ansprüche 4 bis 6, dadurch gekennzeichnet, daß der Elektrolyt weiter Schwefelanhydrid $SO_2$ enthalt, wobei das Molverhältnis $M'/SO_2$ größer als 1,5 ist.

8. Elektrochemischer Generator nach einem der Ansprüche 1 und 2, dadurch gekennzeichnet, daß das Lösungsmittel Thionylchlorid, das Alkalimetall Natrium und der gelöste Stoff Natriumtetrachloraluminat $NaAlCl_4$ ist.

9. Elektrochemischer Generator nach Anspruch 8, dadurch gekennzeichnet, daß die mineralische Verbindung Natriumchlorsulfataluminat gemaß der Formel $NaAl(SO_3Cl)_4$ ist.

10. Verfahren zur Herstellung eines Generators

nach einem der vorhergehenden Ansprüche, dadurch gekennzeichnet, daß die mineralische Verbindung dem Elektrolyten direkt beigegeben wird.

11. Verfahren zur Herstellung eines Generators nach einem der vorhergehenden Ansprüche, dadurch gekennzeichnet, daß die mineralische Verbindung in situ durch Reaktion des Elektrolyten mit einer unter den Stoffen $HSO_3X$, $SO_3$, $H_2SO_4$ und ihren Mischungen ausgewählten Verbindung gewonnen wird, wobei X unter den Elementen Chlor, Fluor, Brom und Jod ausgewählt wird.

## Claims

1. An electrochemical generator, whose negative active material is based on an alkali or alkaline earth metal and whose electrolyte comprises a solute and at least one solvent selected from a group consisting of thionyl chloride $SOCl_2$, phosphoryl chloride $POCl_3$, vanadyl trichloride $VOCl_3$, vanadyl tribromide $VOBr_3$, thionyl bromide $SOBr_2$, sulfuryl chloride $SO_2Cl_2$, chromyl chloride $CrO_2Cl_2$, selenium oxychloride $SeOCl_2$ or mixtures thereof, said solvent constituting also the positive active material, characterized in that said electrolyte further contains at least one mineral substance of the alkali or alkaline earth polyhalogenosulfatometallate type having the formula

$MM'_m(SO_3X)_n$

in which

M is said alkali or alkaline earth metal,

M' is selected from the group comprising Al, B, Ga, In, V, Sb, Nb, Si, W and Ta,

X is selected from the group comprising chlorine, fluorine, bromine and iodine, and wherein

m = 1, if M is an alkali metal,

m = 2, if M is an alkaline earth metal,

with the value of n being derived therefrom by the balancing of the valences.

2. A generator according to claim 1, characterized in that the concentration of the mineral substance is greater than 0,01 % by weight of the electrolyte.

3. A generator according to one of claims 1 and 2, characterized in that said electrolyte further contains sulfur dioxide.

4. An electrochemical generator according to one of claims 1 and 2, characterized in that said solvent is thionyl chloride, said alkali metal is lithium and said solute has the formula $LiM'Cl_x$.

5. An electrochemical generator according to claim 4, characterized in that the solute of said electrolyte is lithium tetrachloroaluminate $LiAlCl_4$.

6. An electrochemical generator according to claim 5, characterized in that said mineral substance is a lithium chlorosulfatoaluminate with the formula $LiAl(SO_3Cl)_4$.

7. An electrochemical generator according to any one of claims 4 to 6, characterized in that said electrolyte further comprises sulfur dioxide and the molar ratio of $M' : SO_2$ is greater than 1,5.

8. An electrochemical generator according to any one of claims 1 and 2, characterized in that said solvent is thionyl chloride, said alkali metal is sodium and said solute is sodium tetrachloroaluminate $NaAlCl_4$.

9. An electrochemical generator according to claim 8, characterized in that said mineral substance is sodium chlorosulfatoaluminate with the formula $NaAl(SO_3Cl)_4$.

10. A process for the manufacture of a generator according to any one of the preceding claims, characterized in that said mineral substance is added directly to said electrolyte.

11. A process for the manufacture of a generator according to any one of the preceding claims, characterized in that said mineral substance is formed in situ by reacting said electrolyte with a substance selected from the group comprising $HSO_3X$, $SO_3$, $H_2SO_4$ and mixtures thereof, X being selected from the group comprising chlorine, fluorine, bromine and iodine.

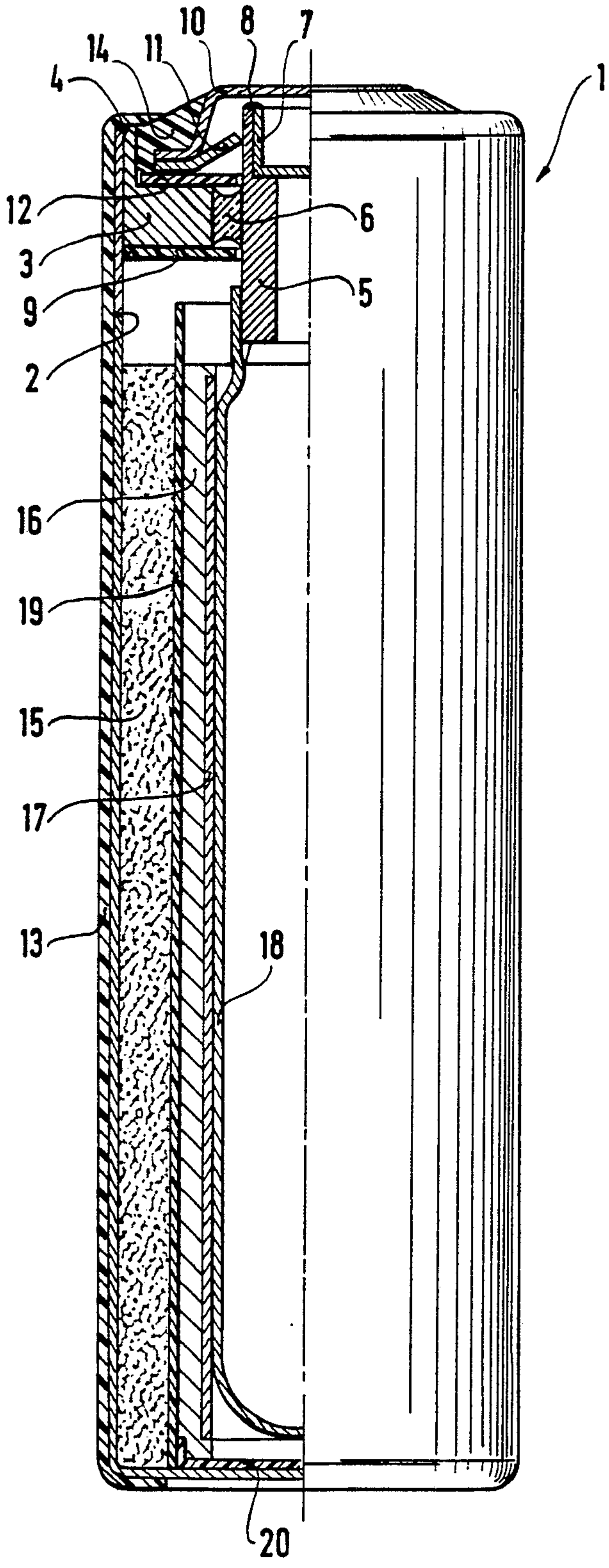
10
8
7
14
11
4
1
12
6
3
9
5
2
16
19
15
17
13
18
20